# EUROPEAN PATENT SPECIFICATION

(11) **EP 3 524 746 B1**
(45) Date of publication and mention of the grant of the patent: **27.03.2024**
(21) Application number: 17843004.7
(22) Date of filing: 25.08.2017
(51) Int. Cl.: E04C 1/00, E04B 1/35, E04B 2/86

(54) **METHOD FOR THE FABRICATION OF RESISTANT ELEMENTS FOR USE IN CONSTRUCTION**
VERFAHREN ZUR HERSTELLUNG WIDERSTANDSFÄHIGER ELEMENTE ZUR VERWENDUNG IM BAUWESEN
PROCÉDÉ DE FABRICATION D'ÉLÉMENTS RÉSISTANTS DESTINÉS À LA CONSTRUCTION

(30) Priority: 26.08.2016 ES 201631124
(43) Date of publication of application: 14.08.2019
(73) Proprietor: Garcia Galadi, Irma, 17480 Roses (ES)
(72) Inventor: GARCIA GALADI, Irma, 17480 Roses (Girona) (ES); GARCIA ARIAS, Juan José, 17480 Roses (Girona) (ES)
(74) Representative: Espiell Volart, Eduardo Maria
(86) International application number: PCT/ES2017/070587
(87) International publication number: WO 2018/037147

(56) References cited:
- CN-A- 104 264 862
- CN-A- 104 328 845
- CN-A- 104 514 305
- CN-A- 104 514 305
- CN-A- 105 021 470
- CN-U- 203 113 601
- CN-U- 204 738 415
- KR-A- 20160 043 509
- US-A1- 2007 138 678

## Description

### Technical Field of the invention

The present invention relates to a new method for the fabrication of resistant elements for use in construction, such as partitions, walls, dividers, girders, columns, and the like

### Background of the invention

In construction, the formwork is a mould formed with panels or plates made of metal, plastic, fibre composite, or similar material, into which the concrete is poured until it sets, and which are usually removed afterwards.

At present, the implementation of constructive solutions for linear or flat reinforced concrete elements, whether structural or enclosures, are resolved with pre-fabricated formwork systems, that require expensive auxiliary resources, lifting and transport logistics, as well as the support of in situ systems for finishing and matching, which are still inefficient for being labour-intensive, requiring materials and tooling for placing and removing formwork, etc.

Therefore, the formwork presents problems of being an expensive operation, labour-intensive, difficult and dangerous, requiring the movement of very heavy elements.

On the other hand, the reinforced concrete elements are not normally designed originally to have a visible aesthetic finish, be waterproof or to accommodate and integrate auxiliary facilities.

At present, in the construction of flat or linear concrete elements or similar, heavy moulds or formwork that need to be adjusted and joined with a large number of tools and additional stabilisation and bracing elements are used, being this whole system independent and separated from the item to be built itself, since they are removed and reused in subsequent operations with a very limited useful life.

CN104514305 disclose a hollow truss floor slab that can be 3D printed in a factory and whose joints are filled with concrete. US2007138678 disclose a 3D printer for buildings with at least three nozzles. One for each side of the partition and one for a resilient material between them. The present invention aims to provide a simultaneous solution to these inconveniences and problems, as well as providing additional advantages.

### Explanation of the invention

For this purpose, the object of the present invention is a method to fabricate resistant elements in construction formwork, of new concept and functionality, that in its essence is characterised by the descriptive part of the appended claim 1.

In claim 2 is described the preferred embodiments of the method of this invention.

### Brief description of the drawings

A detailed description is given below of the preferred, but not exclusive, embodiments of the method for the fabrication of resistant elements for construction that is the object of the present invention, accompanied by some drawings to illustrate and to facilitate the understanding by way of example, not limitative, of embodiments of the present invention. In these drawings:
- Fig. 1: is a perspective view of the first phase of 3D printing of the construction element, in this case, constituted by a wall;
- Fig. 2: is a plan view of the wall of Fig. 1 once completed its erection by 3D printing;
- Fig. 3: is a view similar to that shown in Fig. 2, in which the space has been filled with a resistant element for setting, in this case, concrete or cement;
- Figs. 4 to 7: are views of corresponding wall type enclosures fabricated using the method of the present invention;
- Figs. 8 to 11: are four section views of two floor slabs which are not part of the claimed subject-matter.
- Figs. 12 and 13: are two section views corresponding to two pillars fabricated using the method of the present invention; and
- Figs. 14 to 16: are three section views corresponding to two roofs fabricated using the method of the present invention.

### Detailed description of the drawings

In these drawings can be seen the operating mode of the fabrication method for surfaces and other resistant elements (13; 15; 16; 17; 18) for construction, in particular, although not exclusively, from formwork (10) for concrete, made of suitable materials to form part of the finish or plastering of the surface or resistant element (13; 15; 16; 17; 18) once the concrete is set (3).

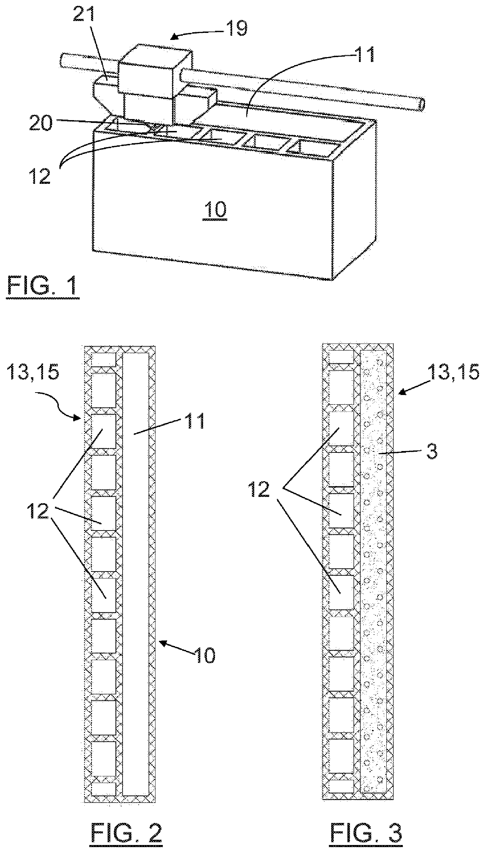

As can be seen especially in Figs.1 to 3, the method according to the present invention comprises the steps of:
- printing, using a 3D printer (19), the mould or formwork (10) of a resistant element (13, 15, 16, 17, 18), leaving a space of moulding (11) to be filled with a resistant material (3) such as cement or concrete (Fig. 1);
- filling the moulding space (11) with said resistant material;
- keeping the 3D printed mould (10) in place, without removing it, which acts as a finishing material of that resistant element (13), whether as finishing for the wall facing, trim, or plastering of same.

The mould or formwork (10) is furnished with hollow spaces (12) to accommodate elements of service facilities (9), such as water, electricity, gas, and home automation.

The mould or formwork (10) are made from one of the following materials that is printed in 3D: fibreglass, polypropylene, nylon, carbon, ABS, composite resins, mortar compounds, mixtures of the above.

The resistant element (13) that is formed from the formwork (10) according to the method of the present invention is one selected from among wall (15), pillar (17), roof (18) The mortar material normally enters through the top of the 3D printer (19) through a hopper (21), but it could happen for other materials such as fibreglass, polypropylene, nylon, carbon, ABS, composite resins, mortar compounds, etc., that they may be fed by other means.

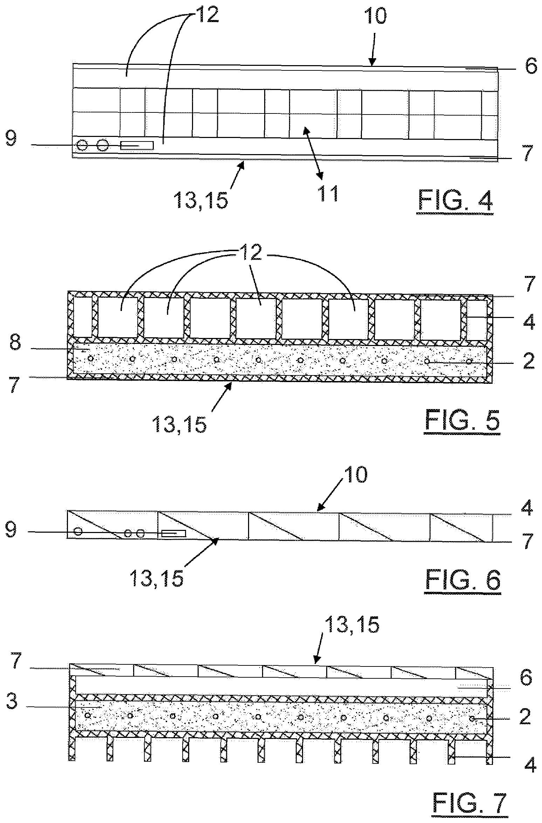

In the Figures. The Figs. 4 to 7 show four examples of the fabrication of walls (15), made according to the present invention. Fig. 4 corresponds essentially to the example depicted in Fig. 3, except for adding the bars (2) corresponding to reinforced concrete.

Fig. 4 is an interior wall (15) that can be filled with any product for the construction (concrete, insulation, etc.) (3) with installations (9) and final finish on either side (7).

Fig. 5 is a structural wall (15) that is formed with steel bars (2) and concrete insulation (8). Also, its guides (4) can serve as the base unit for coupling any type of finish on either side (7). Fig. 6 is an interior wall (15) with installations (9) in which it is possible to introduce any type of insulation and with finishes on either side (7).

Fig. 7 is an interior wall (15) which is formed with reinforcing steel (2) and concrete (3) with insulation (6), which has a structural function, is finished on one side (7) and has coupling guides on the other (4).

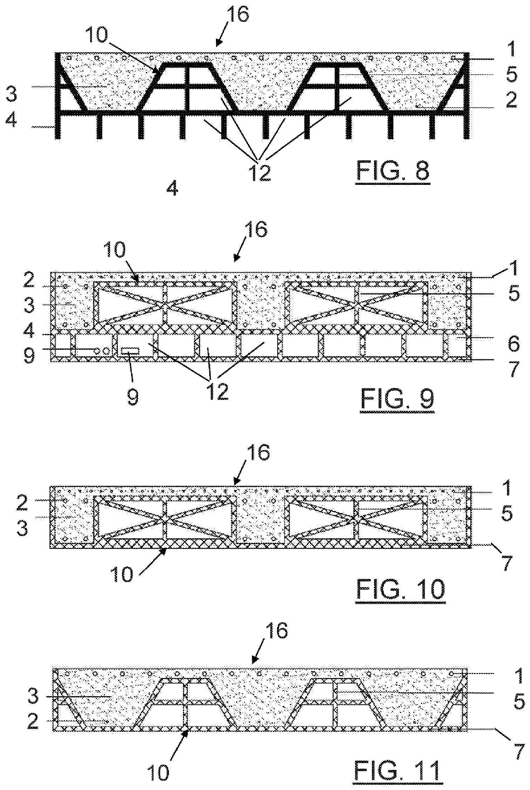

In the Fig. 8 to 11, four examples are shown of the fabrication of floor slabs (16), which are not part of the present invention.

Fig. 8 is a unidirectional floor slab (16) or concrete (3) and steel bar (2) reticular with the guides (4) formed by a mesh (1) and blocks (5).

Fig. 9 is a unidirectional floorslab (16) or concrete (3) and steel bar (2) reticularwith the guides (4), and its insulation (6), formed by mesh (1) and blocks (5), also with installations (9) and roof finish (stone, tile, etc.) (7).

Fig. 10 is a unidirectional floor slab (16) or concrete (3) and steel bar (2) reticular, formed by mesh (1) and blocks (5) with roof finish (stone, tile, etc.) (7).

Fig. 11 is another type of concrete (3) and steel bar (2) floor slab (16) formed by mesh (1) and blocks (5) with roof finish (stone, tile, etc.) (7).

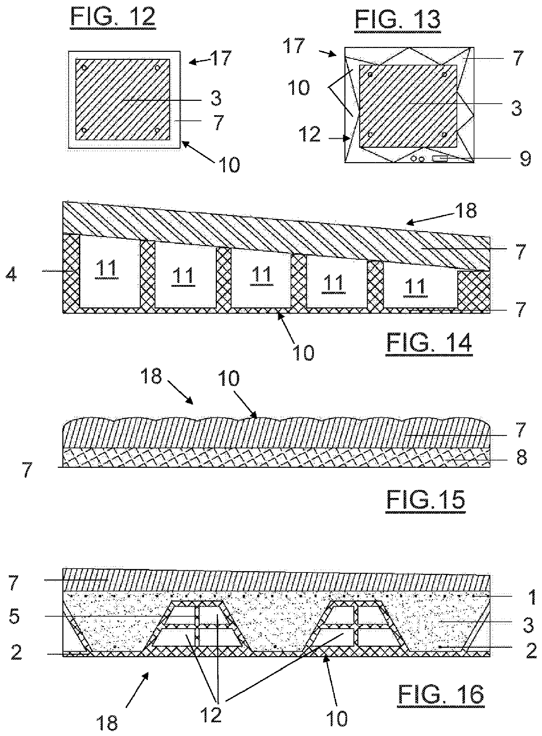

The Figs. 12 and 13 show two examples of the fabrication of pillars (17), made according to the present invention.

Fig. 12 is a concrete (3) pillar (17) with a finish (stone, tile, etc.) (7).

Fig. 13 is a concrete (3) pillar (17) with installations (9) and finish (stone, tile, etc.) (7).

Figs. 14,15, and 16 show three examples of the fabrication of roofs (18), made according to the present invention.

Fig. 14 is a roof (18) with insulation in the top part, with an external finish (7), as well as coupling guides (4) and interior finish (7).

Fig. 15 is a roof (18) with an upper and lower finish (7) and insulation with concrete (8). In this case, the formwork (10) provides its own upper layer of finish (7)

Fig. 16 is a flat concrete (3) and reinforcing steel (2) roof (18) formed by mesh (1), blocks (5) and insulation, with interior and exterior finish (7).

Sufficiently described the nature of the present invention, as well as the embodiment in practice, it should be noted that all the above is subject to variations in detail as long as they fall within the scope of the appended claims.

## Claims

1. Method for the fabrication of resistant elements for use in construction, where the resistant element (13) is one selected from among wall (14), partition (15), pillar (17), or roof (18), the method comprising the steps of:
- printing, using a 3D printer, the mould or formwork (10) of a resistant element, leaving a space (11) to be filled with a resistant material (3) such as cement or concrete, and also providing in the mould or formwork (10) hollow spaces (12) to accommodate elements of service facilities (9) such as water, electricity, gas, and home automation;
- filling the moulding space (11) with said resistant material; and
- keeping the 3D printed mould (10) in place, without removing it, which acts as a finishing material of that resistant element (13), whether as finishing for the wall facing, trim, or plastering of same.

2. Method according to claim 1, wherein the mould or formwork (10) are manufactured with one of the following materials that is printed in 3D: fibreglass, polypropylene, nylon, carbon, ABS, composite resins, mortar compounds, mixtures of the above.

## Patentansprüche

1. Verfahren zur Herstellung widerstandsfähiger Elemente zur Verwendung im Bauwesen, wobei das widerstandsfähige Element (13) eines ist, das aus einer Wand (14), einer Trennwand (15), einer Säule (17) oder einem Dach (18) ausgewählt wird, wobei das Verfahren die folgenden Schritte umfasst:
- Drucken der Form oder Schalung (10) eines widerstandsfähigen Elements unter Verwendung eines 3D-Druckers, wobei ein Raum (11) verbleibt, der mit einem widerstandsfähigen Material (3) wie Zement oder Beton zu füllen ist, und ferner Bereitstellen in der Form oder Schalung (10) von Hohlräumen (12) zur Aufnahme von Elementen von Versorgungseinrichtungen (9) wie Wasser, Strom, Gas und Hausautomatisierung;
- Füllen des Formraums (11) mit dem widerstandsfähigen Material; und
- Halten der 3D-gedruckten Form (10) an ihrem Platz, ohne sie zu entfernen, die als Abschlussmaterial dieses widerstandsfähigen Elements (13) dient, sei es als Abschluss für die Wandverkleidung, Verkleidung oder Verputz davon.

2. Verfahren nach Anspruch 1, wobei die Form oder Schalung (10) mit einem der folgenden Materialien hergestellt wird, die in 3D gedruckt werden: Glasfaser, Polypropylen, Nylon, Kohlenstoff, ABS, Verbundharze, Mörtelverbindungen, Mischungen der oben genannten.

## Revendications

1. Procédé de fabrication d'éléments résistants destinés à la construction, où l'élément résistant (13) est un choisi parmi un mur (14), une cloison (15), un pilier (17), ou un toit (18), le procédé comprenant les étapes consistant à :
- imprimer, à l'aide d'une imprimante 3D, le moule ou coffrage (10) d'un élément résistant, en laissant un espace (11) à remplir avec un matériau résistant (3) tel que du ciment ou du béton, et en prévoyant également dans le moule ou coffrage (10) des espaces creux (12) pour accueillir des éléments d'installations de service (9) tels que de l'eau, de l'électricité, du gaz, et de la domotique ;
- remplir l'espace de moulage (11) avec ledit matériau résistant ; et
- maintenir le moule imprimé en 3D (10) en place, sans l'enlever, qui agit en guise de matériau de finition de cet élément résistant (13), soit en guise de finition pour le parement de mur, la garniture, ou la plâtrerie de celui-ci.

2. Procédé selon la revendication 1, dans lequel le moule ou coffrage (10) sont fabriqués avec l'un des matériaux suivants qui est imprimé en 3D : fibre de verre, polypropylène, nylon, carbone, ABS, résines composites, composés de mortier, mélanges de ce qui précède.
